(19) **Europäisches Patentamt / European Patent Office / Office européen des brevets**

(11) **EP 1 927 884 B1**

(12) **EUROPÄISCHE PATENTSCHRIFT**

(45) Veröffentlichungstag und Bekanntmachung des Hinweises auf die Patenterteilung:
**03.11.2010 Patentblatt 2010/44**

(51) Int Cl.:
*G02F 1/03* (2006.01)    *G02F 1/29* (2006.01)

(21) Anmeldenummer: **07017481.8**

(22) Anmeldetag: **06.09.2007**

(54) **Vorrichtung zur Erzeugung eines Bessel-Lichtstrahlenbündels mit wenigstens einem elektrooptischen Element**

Device for generating a Bessel light beam bundle with at least one electro-optical element

Dispositif de production d'un faisceau de rayons lumineux à l'aide d'au moins un élément optoélectronique

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **28.11.2006 DE 102006056022**

(43) Veröffentlichungstag der Anmeldung:
**04.06.2008 Patentblatt 2008/23**

(73) Patentinhaber: **Fraunhofer-Gesellschaft zur Förderung der angewandten Forschung e.V. 80686 München (DE)**

(72) Erfinder:
• **Kröning, Michael, Prof. Dr. h.c.
  66123 Saarbrücken (DE)**
• **Kazak, Nikolai, Prof. Dr. h.c.
  220012 Minsk (BY)**
• **Mashenko, Aleksandr Georgiewitsch, Dr.
  220108 Minsk (BY)**
• **Ropot, Pjotr Iosifowitsch, Dr.
  220082 Minsk (BY)**

(74) Vertreter: **Rösler, Uwe
Rösler Patentanwaltskanzlei
Landsberger Strasse 480a
81241 München (DE)**

(56) Entgegenhaltungen:
**JP-A- 11 259 895    US-A- 3 575 487**

• **ROPOT P I ET AL: "Self-action of Bessel light beams in cubic gyrotropic photorefractive crystals" JOURNAL OF APPLIED SPECTROSCOPY, KLUWER ACADEMIC PUBLISHERS-PLENUM PUBLISHERS, NE, Bd. 73, Nr. 4, 1. Juli 2006 (2006-07-01), Seiten 551-556, XP019450439 ISSN: 1573-8647**
• **KING ET AL: "Formation of higher-order Bessel light beams in biaxial crystals" OPTICS COMMUNICATIONS, NORTH-HOLLAND PUBLISHING CO. AMSTERDAM, NL, Bd. 187, Nr. 4-6, 15. Januar 2001 (2001-01-15), Seiten 407-414, XP004315331 ISSN: 0030-4018**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

### Technisches Gebiet

Die Erfindung bezieht sich auf eine Vorrichtung zur Erzeugung eines Bessel-Lichtstrahlenbündels mit wenigstens einem elektrooptischen Element, das über eine Lichtein- und Lichtaustrittsoberfläche verfügt, die das elektrooptische Element längs einer das optische Element durchsetzenden optischen Achse einander gegenüberliegend begrenzen und das in Längserstreckung zur optischen Achse eine das elektrooptische Element seitlich begrenzende Mantelfläche vorsieht, längs der Flächenelektroden angebracht sind.

### Stand der Technik

Bessel-Lichtstrahlenbündel zeichnen sich durch ihre quasi-beugungsfreien Eigenschaften aus, bei denen die Lichtenergie längs des sehr dünnen Strahls mit in Strahlausbreitungsrichtung relativ konstanter und geringer Querabmessung gebündelt wird. Näheres zu den Grundlagen von Bessel-Lichtstrahlenbündel findet sich in Artikeln von J. Durnin, "Exact solutions for nondiffracting beams: I. The scalar theory", J. Opt. Soc. Am. A, 4 (1987) pp. 651-654 oder J. Durnin, J. J. Miceli, and J. H. Eberly, "Diffraction-free beams", Phys. Rev. Lett 58, (1987) S. 1499-1501.
Bessel-Lichtstrahlenbündel werden in vielen Anwendungen der linearen und nichtlinearen Optik, bspw. zu Zwecken der Frequenzkonversion oder als Pumplichtstrahlen zur Induzierung spezieller optischer Effekte eingesetzt, siehe auch V. N. Belyi, N. S. Kazak, N. A. Khilo, "Frequency conversion of Bessel light beams in nonlinear crystals", Quantum Electronics 30 (2000) S. 753-766 oder N. A. Khilo, R. V. Chulkov, V. N. Belyi, N. S. Kazak, A. S. Grabtchikov, and V. A. Orlovich, "Properties of Raman stokes light generated by a zero-order Bessel pump beam", Preprint Nr. 740, B. I. Stepanov Institute of Physics of Belarus, Minsk, S. 65.
Bessel-Lichtstrahlenbündel weisen eine ringförmige Lichtintensitätsverteilung auf, wobei die Wellenvektoren des Lichtstrahles auf einem Kegel liegen. Daher werden für die Strahlerzeugung entsprechende rotationssymmetrische optische Elemente, wie Hologramme, Axicone oder asphärische Linsen eingesetzt, die in der Lage sind ebene Wellenfronten eines parallel verlaufenden Lichtstrahls in einen Lichtstrahl mit ringförmigem Strahlquerschnitt umzuformen.
Die meistgebrauchten optischen Elemente für die Erzeugung von Bessel-Lichtbündel 0ter Ordnung sind kegelförmige Linsen, so genannte Axicone. Der Brechungswinkel dieser Elemente ist konstant, wodurch auch die Konstanz des Konvergenzwinkels der Wellenvektoren des Lichtbündels in Strahlrichtung hinter dem Axicon gewährleistet wird.
Nachteil der gegenwärtig verwendeten Axicone ist, dass ihre optischen Eigenschaften unveränderlich sind. In vielen praktischen Anwendungen besteht der Wunsch und die Notwendigkeit, die Strahleigenschaften eines Bessel-Lichtstrahlenbündels während des Einsatzes zu ändern. Hierzu gilt es einen Satz von Axiconlinsen mit unterschiedlichen Öffnungswinkeln bereitzuhalten, die bedarfsweise in den Strahlengang eines optischen Systems zur Erzeugung von Bessel-Lichtstrahlenbündel einzusetzen sind. Der Wechsel der Linsen nimmt erhebliche Zeit für Ein- und Ausbau sowie für eine Neujustage in Anspruch.
Manchmal erfordern Anwendungen auch zwei möglichst gleiche Axicone, zum Beispiel zur Durchführung der Lichtschnittmethode an zylinderförmigen Objekten, siehe hierzu den Beitrag von T. Dresel, J. Schwider, A. Wehrhahn, S. Babin, "Grazing incidence interferometry applied to the measurement of cylindrical surfaces", Optical Engineering 34 (1995), S. 3531-3535. Hierbei kommen zwei gleichartige Axicone zur Vermeidung einer sich ausbildenden räumlichen Modulation des Interferenzbildes ohne Objekt zum Einsatz. Die Fertigung von exakt baugleichen Axiconen führt jedoch auf große technische Probleme und hohen Aufwand. Wünschenswert wäre dagegen ein einziges Axicon, das sich im Betrieb schnell und einfach optisch durchsteuern ließe.
Aus der Literatur ist ferner eine Anordnung bekannt, bei der sich ein Axicon zwischen zwei Sammellinsen befindet. Hierbei läuft ein Ausgangsstrahlenbündel mit einem Gauß'schen Strahlprofil durch die erste Sammellinse und wandelt sich in der Brennebene dieser Linse, in der sich das Axicon befindet in einen Lichtkreis um. Die zweite Linse konvertiert die ringförmige Feldverteilung in das Bessel-Lichtstrahlenbündel. Bei Variation der Position des zwischen beiden Sammellinsen befindlichen Axicons ändert sich der Radius in der Brennebene der ersten Linse und damit der effektive Öffnungswinkel des Bessel-Lichtstrahlenbündels. Die Verstellgeschwindigkeit einer derartigen Anordnung ist jedoch nicht besonders hoch. Näheres hierzu findet sich in dem Artikel von S. Klewitz, F. Brinkmann, S. Herminghaus, and P. Leiderer, "Bessel-beam pumped tunable distributed-feedback laser", Appl. Opt. 34 (1995) S. 7670-7673.
Die größte Verstellgeschwindigkeit mit der die optischen Eigenschaften von Axiconen beeinflussbar sind bieten optische Systeme, die auf der Brechungsindexänderung unter Einfluss eines elektrischen Feldes basieren. Die unmittelbare Einwirkung des elektrischen Feldes auf die elektrooptischen Eigenschaften eines optischen Mediums und dementsprechend auf die Ausbreitungsrichtung der Lichtstrahlen beim Durchtritt durch derartige Medien schließt den Faktor der mechanischen Trägheit aus, der die Frequenzantwort von Vorrichtungen wie vorstehend beschrieben begrenzt. So weisen diese Systeme den weiteren Vorteil auf, dass sie sich einfach mit anderen Systemkomponenten elektrisch synchronisieren lassen.

In einem Beitrag von V. E. Leparskii, A.G. Mashchenko, "Elektrooptische kegelförmige Linsen für die Bildung von Bessel Lichtstrahlenbündel", Izvestija der Staatsuniversität F. Skoriny, Gomel (2001(6)) S. 9-12, wird ein Weg aufgezeigt, wie mit Hilfe eines nichtlinearen elektrooptischen Kristalls die optischen Eigenschaft eines Axicons nachgebildet sowie dessen Abbildungseigenschaften zugleich variabel eingestellt werden können. Von zentraler Bedeutung hierbei ist die Nutzung des linearen elektrooptischen Effektes oder auch Pockels-Effekt genannt, der zu einer Brechungsindexänderung innerhalb des durchstrahlten Mediums führt. Der Pockels-Effekt tritt ausgeprägt in Kristallen mit nicht-zentrischer Symmetrie auf.

Damit sich ein optisch nichtlinearer Kristall in derselben Weise wie ein Axicon auf ein einfallendes Lichtstrahlenbündel auswirkt, ist beim linearen elektrooptischen Effekt eine der Radialkoordinate proportionale Änderung der elektrischen Feldstärke erforderlich. Die lineare Verteilung elektrischer Felder wird mit Hilfe eines Systems von Flächenelektroden erzeugt. Das optische System besteht hierbei aus einer planparallelen Kristallplatte, wobei auf einer Oberfläche der Kristallplatte transparente Elektroden in Form von konzentrischen Kreisen aufgebracht sind. Auf der anderen Oberfläche befindet sich eine feste Elektrode. Durch einen speziellen Spannungsteiler werden die kreisförmigen Elektroden so mit Spannung versorgt, dass sich als Funktion des Abstandes r vom Zentrum ein Potential Ur/R ergibt, wobei U die Potentialdifferenz zwischen den äußeren Elektroden und R deren Abstand vom Zentrum ist. Die Mittelelektrode liegt dabei auf gleichem Potenzial wie die Außenelektrode. Verwendet man zum Beispiel einen Lithiumniobat-Kristall, dessen optische Achse mit der Systemachse zusammenfällt, so ist bei einer Steuerspannung von 10 kV und einem Lichtbündeldurchmesser von 5 mm das System einem Axicon aus normalem Glas mit einem Öffnungswinkel von 4,5' äquivalent.

Aus der US 3575486 ist eine optische Quadrupolanordnung zur Strahlablenkung von linear polarisiertem Licht zu entnehmen, die zwei baugleiche optische Quadrupole längs einer gemeinsamen optischen Achse nacheinander angeordnet vorsieht, von denen jeder Quadrupol zur Beeinflussung des optischen Brechungsindexes vier getrennte Flächenelektroden an seiner Mantelfläche vorsieht. Diese Druckschrift wird als nächstkommender Stand der Technik betrachtet.

## Darstellung der Erfindung

Der Erfindung liegt die Aufgabe zugrunde eine Vorrichtung zur Erzeugung eines Bessel-Lichtstrahlenbündels mit wenigstens einem elektrooptischen Element, das über eine Lichtein- und Lichtaustrittsoberfläche verfügt, die sich jeweils längs einer das elektrooptische Element durchsetzenden optischen Achse gegenüberliegen und das in Längserstreckung zur optischen Achse eine das elektrooptische Element seitlich begrenzende Mantelfläche vorsieht, derart weiterzubilden, dass eine möglichst einfache, kostengünstige und kompakte Anordnung geschaffen werden soll, mit der die Erzeugung von Bessel-Lichtstrahlenbündel mit variablen Öffnungswinkeln über einen großen Bereich möglich sein soll. Die Variation des Öffnungswinkels soll darüber hinaus schnell in Verstellzeiten von unter $10^{-8}$ s erfolgen und dies und ohne die Bewegungen mechanischer Komponenten.

Die Lösung der der Erfindung zugrunde liegenden Aufgabe ist im Anspruch 1 angegeben. Den Erfindungsgedanken vorteilhaft weiterbildende Merkmale sind Gegenstand der Unteransprüche sowie der Beschreibung insbesondere unter Bezugnahme auf die Ausführungsbeispiele zu entnehmen.

Lösungsgemäß zeichnet sich eine Vorrichtung zur Erzeugung eines Bessel-Lichtstrahlenbündels mit wenigstens einem elektrooptischen Element, das über eine Lichtein- und Lichtaustrittsoberfläche verfügt, die das elektrooptische Element längs einer das optische Element durchsetzenden optischen Achse einander gegenüberliegend begrenzen und das in Längserstreckung zur optischen Achse eine das elektrooptische Element seitlich begrenzende Mantelfläche vorsieht, längs der Flächenelektroden angebracht und derart ausgebildet sind, dass bei Applikation einer elektrischen Spannung an die Flächenelektroden im Inneren des elektrooptischen Elementes ein elektrisches Feld generierbar ist, dessen zur optischen Achse radial orientierter Feldstärkeverlauf sich linear proportional mit dem radialen Abstand zur optischen Achse ändert, dadurch aus, dass längs zur optischen Achse außerhalb des elektrooptischen Elementes ein optisches Lichtphasenwandlersystem vorgesehen ist, das von linear polarisiertem Licht durchsetzbar ist, wobei die Polarisationseigenschaften des Lichtstrahls in Abhängigkeit einer innerhalb des elektrooptischen Elementes vorherrschenden Indikatrix derart anpassbar sind, dass die Polarisation des Lichtstrahls in jedem Punkt der Apertur, d.h. der von dem Lichtstrahl in dem elektrooptischen Element beleuchteten Querschnittsfläche, mit der Indikatrix zuordenbaren Achsen zusammenfällt.

Hierbei durchläuft ein in ein Bessel-Lichtstrahlenbündel umzuwandelnder Lichtstrahl längs der optischen Achse des elektrooptischen Elementes, das vorzugsweise aus einem 3m-Kristall, bspw. Litiumniobat-Kristall, besteht, und tritt über die Lichteintrittsoberfläche in das elektrooptische Element ein. Die Lichteintrittsoberfläche weist hierbei keine Lichtverluste verursachenden Strukturen auf und verfügt vorzugsweise über eine die Reflexionsverluste minimierende Beschichtung. Auch ist es alternativ oder in Kombination möglich die Lichteintrittsoberfläche unter dem Brewster-Winkel zum einfallenden Lichtstrahl zu neigen, um auf diesen Weise Reflexionsverluste auszuschließen oder zumindest zu reduzieren.

Innerhalb des elektrooptischen Elementes erfährt der einfallende Lichtstrahl im Wege der Wechselwirkung mit den optisch anisotropen Brechungseigenschaften des elektrooptischen Elementes eine Formumwandlung, die sich in Abhängigkeit des das im Inneren des elektrooptischen Elementes vorherrschenden elektrischen Potenzials und die damit verbundene Auswirkung auf die Anisotropie der Brechkraft individuell vorgebbar einstellen lässt. So kann der Öffnungswinkel des letztlich aus dem elektrooptischen Element durch die Lichtaustrittsoberfläche austretenden Bessel-Lichtstrahlenbündels individuell durch Vorgabe des im Inneren des Elementes vorherrschenden elektrischen Potenzials und die damit verbundene Brechkraftverteilung eingestellt werden. Die für die Steuerung des Öffnungswinkels nötige räumliche Variation der Brechkraft bzw. des Brechungsindex kann vorzugsweise mit einem Quadrupolfeld erzeugt werden, das im Weiteren unter Bezugnahme auf die in den Figuren dargestellten Ausführungsbeispielen näher erläutert wird.

## Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:

Fig. 1     Darstellung eines elektrooptischen Elementes mit seitlich an der Mantelfläche des Elementes vorgesehenen Flächenelektroden zur Erzeugung eines Quadrupolfeldes

Fig. 2 a, b     Darstellung einer räumlich verteilten Polarisation eines Eingangslichtbündels, das für eine Umformung in ein Bessel- Lichtstrahlenbündel erforderlich ist: a) N ungradzahlig, b) N gradzahlig

Fig. 3     Anordnung, die ein Bessel-Lichtstrahlbündel nullter Ordnung aus linear polarisierter Strahlung erzeugt.

## Wege zur Ausführung der Erfindung, gewerbliche Verwendbarkeit

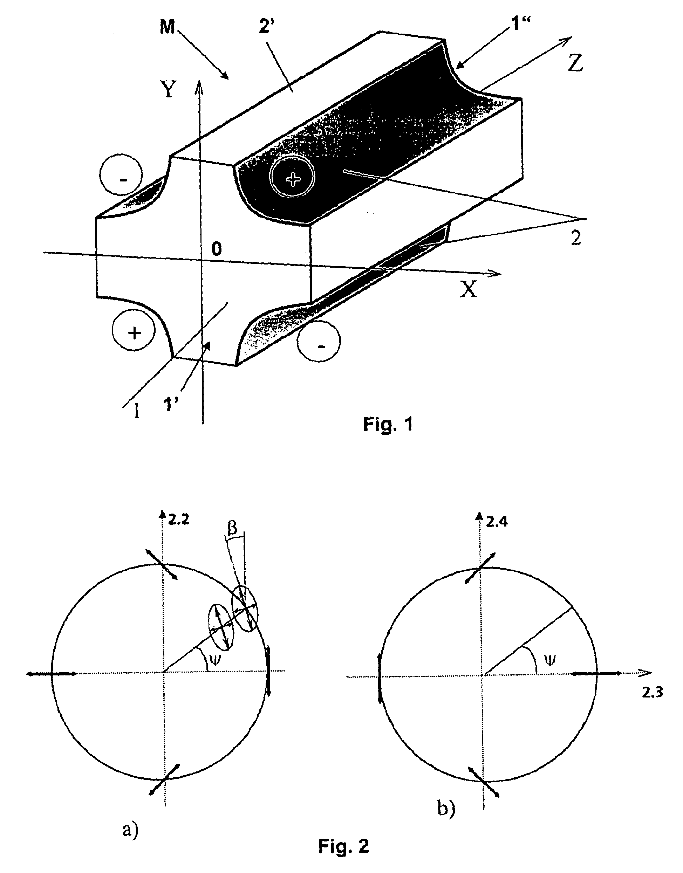

In Figur 1 ist ein elektrooptisches Element 1 dargestellt, das eine räumlich geradprismatische Raumform aufweist und über eine Lichtein-(1') und Lichtaustrittsfläche (1") verfügt. Es sei angenommen, dass die zeichnerische Z-Achse sowohl der Lichtausbreitungsrichtung durch das Element 1, als auch der optischen Achse des elektrooptischen Elements 1 entspricht. Die das elektrooptische Element 1 seitlich begrenzende Mantelfläche M weist zudem vier hyperbelartig gekrümmte Flächenbereiche auf, in denen zur Ausbildung von Flächenelektroden 2 elektrisch leitendes Material, vorzugsweise ein Form einer Metallbeschichtung vorgesehen ist. Die hyperbelartig gekrümmten Flächenbereiche sind allesamt gleichförmig ausgebildet und verlaufen längs zur optischen Achse zueinander parallel. Zwischen jeweils zwei benachbarten Flächenelektroden 2 sind unbeschichtete Mantelflächenbereiche 2', durch die die jeweiligen Flächenelektroden voneinander elektrisch isoliert sind.

Wie bereits erwähnt eignen sich Kristalle der Klasse 3m besonders gut für die Ausbildung einer lösungsgemäßen Vorrichtung, allen voran Lithiumniobat. Auch eignen sich $KD^*P$ oder LBO-Kristalle. Der Kristall wird derart angeordnet, so dass sich Licht entlang der optisch drei zähligen Achse ausbreiten kann. Die Flächenelektroden 2 werden mit jeweils abwechselnden Polaritäten gemäß der Bilddarstellung in Figur 1 mit elektrischem Potenzial versorgt, so dass sich im Inneren des Kristalls 1 ein Quadrupolfeld E ausbilden kann. Hierbei liegt der Vektor des elektrischen Feldes E auf der zur optischen Achse senkrechten Ebene. Mit Hilfe der hyperbelförmigen Flächenelektroden 2, deren Form in der angegebenen x-y-Ebene durch die Gleichung

$$xy = \pm R_0^{\,2}/2 \qquad\qquad (1)$$

gegeben ist, bildet sich in einem zylindrischen Bereich mit einem Radius $R_0$ ein inhomogenes elektrisches Feld mit dem Potenzial

$$\varphi = \frac{\varphi_0}{R_0^{\,2}} xy \qquad\qquad (2)$$

aus, wobei $\varphi_0$ die Potentialdifferenz zwischen den Flächenelektroden und $R_0$ der Abstand zwischen dem Mittelpunkt und den Elektroden sind.

Die elektrische Feldstärke in der Achsenrichtungen OX und OY beträgt dabei

$$E_x = \frac{\partial\varphi}{\partial x} = \frac{\varphi_0}{R_0{}^2}y \, , \quad E_y \frac{\partial\varphi}{\partial y} = \frac{\varphi_0}{R_0{}^2}x \qquad (3)$$

Bei einer derartigen Kopplungsgeometrie tritt in Kristallen der Klasse 3m der doppelt transversale Pockelseffekt. auf. Eine Besonderheit dieses Phänomens ist, dass die optischen Indikatrixkoeffizienten in jedem Punkt der Apertur nicht nur von der Amplitude des elektrischen Feldes **E**, sondern auch von dessen Richtung abhängen. Der Querschnitt der optischen Indikatrix ist eine Ellipse, deren Hauptachse bezüglich der Achsen OX und OY um den Winkel $\beta$ gedreht ist, mit

$$\tan 2\beta = \frac{E_x}{E_y} \, . \qquad (4)$$

Die Änderung des Brechungsindex entlang der Ellipsenhauptrichtungen der einzelnen räumlich verteilten, der Indikatrix zuordenbaren Ellipsen ist durch die Beziehung

$$n_{1,2} = n_0 \pm \frac{1}{2}n_0{}^3 r_{ij}E \qquad (5)$$

gegeben, wobei $E=(E_x{}^2+E_y{}^2)^{1/2}$, $n_0$ der Brechungsindex des ungestörten Kristalls, $r_{ij}$ der elektrooptische Koeffizient (für den Fall eines Lithiumniobatkristalls gilt $r_{ij}=r_{22}$) ist.

Durch Einsetzen der Ausdrücke für den Feldanteil (3) in (5) erhält man:

$$n_{1,2} = n_0 \pm \frac{1}{2}n_0{}^3 r_{22} \frac{\varphi_0}{R_0{}^2}\rho \, , \qquad (6)$$

wobei $\rho$ die radiale Koordinate ist. Aus Gleichung (6) sieht man, dass beim Anlegen der Spannung an die Flächenelektroden der Zusammenhang zwischen Brechungsindex und Koordinate linear ist. Die induzierte Veränderung des Brechungsindex führt zur Ablenkung der durch den Kristall transmittierten Lichtstrahlbündel in radialer Richtung. Im Rahmen der paraxialen Näherung kann man den Strahlablenkungswinkel aus der Relation

$$\frac{d\alpha'}{dz} = \frac{d}{dz}\left(\frac{d\rho}{dz}\right) = \frac{1}{n_0}\frac{dn}{d\rho} \, , \qquad (7)$$

ermitteln. Bei der linearen Änderung des Brechungsindex des Mediums bleibt die Größe $1/n_0(dn/d\rho)$ konstant. Setzt man (6) in (7) ein, erhält man nach Integration

$$\alpha' = \frac{1}{2}\,n_0{}^3 r_{22}\,\frac{\varphi_0 L}{R_0{}^2}\,, \qquad\qquad (8)$$

wobei L die Länge der elektrooptisch wirksamen Zone ist.

Das Ergebnis (8) definiert den Winkel $\alpha'$, um den der Strahl nach Durchlaufen der Zone der Länge L abgelenkt wird. Beim Austritt des Strahls aus dem Kristall wird der Winkel in $n_0$ wegen der Brechung in der Planfläche höher und liegt bei

$$\alpha = \frac{1}{2}\,n_0{}^3 r_{22}\,\frac{\varphi_0 L}{R_0{}^2} = 2 n_0{}^3 r_{22}\,\frac{\varphi_0 L}{D^2}\,, \qquad\qquad (9)$$

wobei D die Apertur des Einfallsbündels ist.

Nach (9) ist der Ablenkungswinkel des Axicons dem elektrooptischen Koeffizienten $r_{22}$, der Systemlänge L und der an den Elektroden anliegenden Potenzialdifferenz $\varphi_0$ proportional sowie umgekehrt proportional dem Quadrat der Apertur D.

Wie oben erwähnt hängen die Orientierung der Polarisationsellipse und die Koeffizienten der optischen Indikatrix über den Kristallquerschnitt mit dem Komponentenverhältnis $E_x$ und $E_y$ zusammen. Setzt man die Größe der Komponenten $E_x$ und $E_y$ aus (3) in die Beziehung (4) ein, erhält man

$$\beta = \frac{1}{2}(\psi + N\pi)\,, \qquad\qquad (10)$$

wobei $\psi$ der Winkel zwischen der radialen Linie zwischen dem Koordinatennullpunkt und der Achse OX ist und N eine beliebige ganze Zahl. Wenn N geradzahlig ist, hat der Zielstrahl eine bestimmte Polarisationsrichtung, wenn N ungeradzahlig ist, hat er die dazu orthogonale Polarisation. Dieser Zusammenhang ist in den Figuren 2 a und b näher illustriert. Es sei angenommen, dass in den Figuren 2 a und b jeweils der Querschnitt des Lichtstrahls innerhalb des elektrooptischen Kristalls dargestellt ist. Für eine wunschgemäße Formgebung des den Kristall durchdringenden Lichtstrahles gilt es die Polarisationseigenschaften des Lichtstrahlenbündels in der gesamten Apertur der seitens der optischen Indikatrix vorgegebenen Ellipsenachsen anzupassen. In Figur 2 a sei N geradzahlig gewählt. Die Ellipsenachsen der Indikatrix bei unterschiedlichen Rotationswinkeln $\psi$ sind am peripheren Umfangsrand der Apertur ersichtlich. So dreht sich die Ellipsenachse der optischen Indikatrix bei Änderung des Seitenwinkels $\psi$, wodurch sich der Brechungsindex des Kristalls linear ändert, der zudem nicht von der Größe des Elektrodenpotenzials abhängt.

Für einen konstanten Winkel $\psi$ bleibt der Drehwinkel der Indikatrix gleich, siehe Figur 2a. So weisen die längs des eingetragenen Radialstrahls dargestellten Ellipsen, die den Indikatrixellipsen entsprechen eine einheitliche Achsenlage auf. Aus diesem Grund ist das System für Licht, dessen Polarisation in jedem Punkt der Apertur mit der passenden Indikatrixachse zusammenfällt, einem Axicon mit dem Öffnungswinkel $\gamma$ gleich, wobei für den Öffnungswinkel $\gamma$ gilt:

$$\gamma = \frac{n_0{}^3 r_{ij}\varphi_0 L}{2(n_0 - 1)D_0{}^2}\,. \qquad\qquad (11)$$

Um mit dem lösungsgemäß ausgebildeten elektrooptischen Element ein Bessel-Lichtstrahlenbündel zu erzeugen, gilt es daher den in das Element eintretenden Lichtstrahl mit Polarisationseigenschaften auszustatten, die zu den Achsen der optischen Indikatrix des elektrooptischen Elementes korrespondieren.

Normalerweise sind Laserstrahlen linear polarisiert, so dass die gewünschte Funktion der bisher diskutierten Anordnung noch nicht gegeben ist. Um die benötigte Verteilung der Lichtpolarisation über den Querschnitt des auf den Kristall einfallenden Lichtstrahlbündels sicherzustellen, wie dies in den Figuren 2 a und b illustriert ist, sind zusätzliche optische Maßnahmen zu treffen.

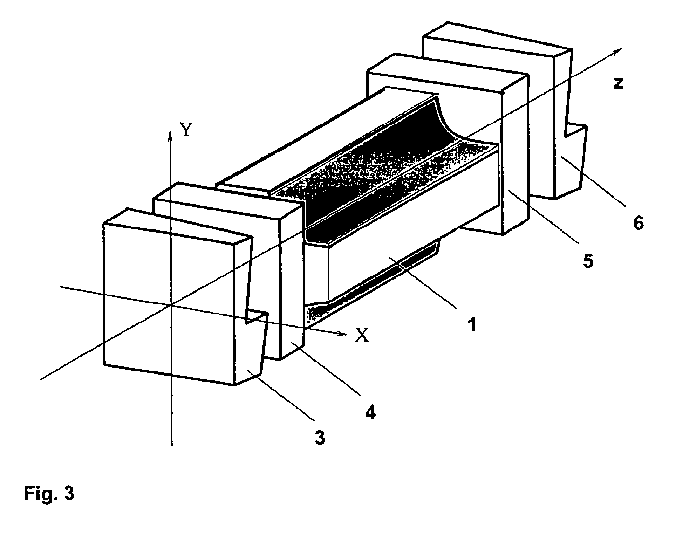

In Figur 3 ist hierzu ein Ausführungsbeispiel angegeben, mit dem es möglich ist, linear polarisiertes Laserlicht an entsprechend den durch das elektrooptische Element 1 vorgegebenen Polarisationsverhältnisse anzupassen.

Das Polarisationssystem besteht aus dem Phasenwandler 3 für die Erzeugung der elliptischen Polarisation mit vorgegebener Orientierungsverteilung der der Indikatrixellipsen. Weiterhin wird eine Viertelwellenplatte 4 verwendet, die das elliptisch polarisierte Licht in jeweils linear polarisierte Lichtanteile konvertiert.

Der Phasenwandler 3 basiert aus einer Scheibe aus einem einachsigen Kristalls, bei der eine Seite eben ist, und die andere Seite so gestaltet wird, dass sich die Scheibendicke b linear im Bereich einer Umdrehung als Funktion des Winkels $\psi$ von $b_0$ nach $b_0 + \lambda/(n_e - n_o)$ ändert, d. h.

$$b = b_0 + \frac{\lambda \psi}{2\pi(n_e - n_0)} . \qquad (12)$$

Hierbei ist $n_e$ der außerordentliche und $n_0$ der ordentliche Brechungsindex des Kristalls.

Die Oberfläche des Phasenwandlers 3 bildet somit einen Teil einer Schraubenfläche.

Jede doppelbrechende Platte, deren Hauptachse einen Winkel von 45° mit dem elektrischen Feldvektor des auf die Platte 3 einfallenden Lichtbündels einnimmt, ruft eine relative Phasenverschiebung von $\Gamma = 2\pi b(n_e - n_o)/\lambda$ zwischen den Hauptbestandteilen des Lichtbündels hervor. Im beschriebenen Fall ergibt sich unter Berücksichtigung von (12)

$$\Gamma = \psi + 4\pi N . \qquad (13)$$

Die Ellipse der Lichtpolarisation ist dabei so orientiert, dass eine ihrer Achsen der Polarisationsebene des einfallenden Lichts parallel ist. Die jenseits des Polarisationswandlers eingesetzte Viertelwellenplatte 4, deren Hauptachsen den Achsen der Polarisationsellipse parallel sind, formt das elliptisch polarisierte Licht in linear polarisiertes Licht um. Dabei hat die Lichtpolarisationsebene am Ausgang einen Winkel, der der Hälfte der Phasenverschiebung r/2 bezüglich seiner ursprünglichen Richtung gleich ist und stimmt damit mit (10) überein.

Zur Beseitigung möglicher Brechungserscheinungen an der Phasenwandlerscheibe 3 bzw. 4 sind die Scheiben in eine Immersionsflüssigkeit eingesetzt. Das dielektrische Einbettungsmittel kann auch zur Erhöhung der Betriebsspannung an den Elektroden genutzt werden. Das ermöglicht es, den Verstellbereich des Öffnungswinkels um ein Mehrfaches zu vergrößern.

Falls für die weitere Anwendung am Lichtaustritt linear polarisiertes Licht erforderlich ist, wird am Ausgang des elektrooptisch steuerbaren Elements gemäß Figur 3 noch eine weitere Polarisationswandleranordnung 5+6 vorgesehen die sich im Wesentlichen aus den gleichen optischen Phasenwandlern 5, 6 zusammensetzt wie die bereits beschriebenen Phasenwandler 3, 4 am Lichteintritt.

Denkbar ist auch die Anwendung anderer Methoden zur Polarisationswandlung, so beispielsweise der Einsatz eines biaxialen Kristalls.

Mithin können folgende Vorteile für die lösungsgemäße Anordnung gegenüber dem bis anhin bekannten Stand der Technik genannten werden:

• Es wird ein elektrisch steuerbares Axicon anstelle eines mechanisch gesteuerten Axicons vorgeschlagen. Die damit ausgeschlossene mechanische Trägheit ermöglicht es, den Öffnungswinkel in einem wesentlich erweiterten Frequenzbereich zu steuern.

• Eine spezielle Anordnung zur Erzeugung der Eingangspolarisation für das strahlablenkende Element wurde vorgeschlagen

• Eine besondere Einfachheit der Synchronisation mit anderen Hochgeschwindigkeitsprozessen und- vorrichtungen wurde erreicht.

Berechnungen haben gezeigt, dass für einen Lithiumniobat-Kristall bei einer Apertur des Lichtbündels von D= 5 mm und einer Kristalllänge von L = 10 cm der Öffnungswinkel nicht mehr als 20' bei einer Steuerspannung von 10 kV beträgt.

**Bezugszeichenliste**

1       Elektrooptisches Element

1'      Lichteintrittsfläche

1"      Lichtaustrittsfläche

2       Flächenelektroden

2'      Elektrisch isolierende Mantelfläche

3       Phasenwandler

4       Lambda / 4- Plättchen

5       Lambda / 4- Plättchen

6       Phasenwandler

**Patentansprüche**

1.   Vorrichtung zur Erzeugung eines Bessel-Lichtstrahlenbündels mit wenigstens einem elektrooptischen Element (1), das über eine Lichtein- (1') und Lichtaustrittsoberfläche (1") verfügt, die das elektrooptische Element (1) längs einer das optische Element (1) durchsetzenden optischen Achse einander gegenüberliegend begrenzen, **dadurch gekennzeichnet, dass** das in Längserstreckung zur optischen Achse eine das elektrooptische Element (1) seitlich begrenzende Mantelfläche vorsieht, längs der Flächenelektroden angebracht und derart ausgebildet sind, dass bei Applikation einer elektrischen Spannung an die Flächenelektroden (2) im Inneren des elektrooptischen Elementes (1) ein elektrisches Feld generierbar ist, dessen zur optischen Achse radial orientierter Feldstärkeverlauf sich linear proportional mit dem radialen Abstand zur optischen Achse ändert, und
dass längs zur optischen Achse außerhalb des elektrooptischen Elementes (1) ein optisches Lichtphasenwandlersystem vorgesehen ist, das von linear polarisiertem Licht durchsetzbar ist, wobei die Polarisationseigenschaften des Lichtstrahls in Abhängigkeit einer innerhalb des elektrooptischen Elementes (1) vorherrschenden Indikatrix derart anpassbar sind, dass die Polarisation des Lichtstrahls in jedem Punkt der Apertur, d.h. der von dem Lichtstrahl in dem elektrooptischen Element (1) beleuchteten Querschnittsfläche, mit der Indikatrix zuordenbaren Achsen zusammenfällt.

2.   Vorrichtung nach Anspruch 1,
**dadurch gekennzeichnet, dass** das elektrooptische Element (1) ein optisch nicht linearer Kristall mit trigonaler Kristallstruktur, vorzugsweise ein Lithiumniobatkristall, ADP, KD$^*$P, BBO ist.

3.   Vorrichtung nach Anspruch 1 oder 2,
**dadurch gekennzeichnet, dass** das elektrooptische Element (1) eine Querschnittsfläche vorsieht, die senkrecht zur optischen Achse des elektrooptischen Elementes (1) orientiert ist,
dass die Querschnittsfläche von einer in der Mantelfläche enthaltenden Mantellinie begrenzt ist, die in wenigstens vier Bereiche jeweils hyperbelförmig gekrümmt ist, dass die hyperbelförmigen Bereiche eine jeweils zur optischen Achse konkav abgewandte Krümmung aufweisen, und
dass die hyperbelförmig ausgebildeten Mantellinienbereiche gleich verteilt um die optische Achse angeordnet sind.

4.   Vorrichtung nach Anspruch 3,
**dadurch gekennzeichnet, dass** die Flächenelektroden (2) als elektrisch leitende Materialschichten ausgebildet sind, die jeweils ausschließlich in Bereichen der Mantelfläche vorgesehen sind, die hyperbelförmig gekrümmt sind.

**5.** Vorrichtung nach Anspruch 3 oder 4,
**dadurch gekennzeichnet, dass** die die Flächenelektroden (2) in Umfangsrichtung längs der Mantelfläche elektrisch voneinander isoliert sind.

**6.** Vorrichtung nach einem der Ansprüche 1 bis 5,
**dadurch gekennzeichnet, dass** wenigstens vier Flächenelektroden (2) zur Erzeugung eines elektrischen Quadrupolfeldes an der Mantelfläche des elektrooptischen Elementes (1) angeordnet sind.

**7.** Vorrichtung nach Anspruch 6,
**dadurch gekennzeichnet, dass** die Flächenelektroden (2) jeweils gleichförmig und gleichgroß ausgebildet sind und in Umfangsrichtung gleich verteilt um die optische Achse angeordnet sind.

**8.** Vorrichtung nach einem der Ansprüche 1 bis 7,
**dadurch gekennzeichnet, dass** das elektrooptische Element (1) längs zur optischen Achse eine Längserstreckung mit gleich bleibendem Querschnitt aufweist.

**9.** Vorrichtung nach einem der Ansprüche 1 bis 8,
**dadurch gekennzeichnet, dass** das Lichtphasenwandlersystem wenigstens einen ersten und zweiten Phasenwandler (3, 4) vorsieht,
dass der zweite Phasenwandler (4) zwischen dem ersten Phasenwandler (3) und der Lichteintrittsfläche (1') des elektrooptischen Elements (1) angebracht ist,
dass der erste Phasenwandler (3) linear polarisiertes Licht in elliptisch polarisiertes Licht mit innerhalb der Apertur des Lichtstrahles vorgebbarer Orientierungsverteilung der Ellipsenachsen, und
dass der zweite Phasenwandler (4) als λ/4-Wellenplatte ausgebildet ist, die elliptisch polarisiertes Licht in linear polarisiertes Licht konvertiert.

**10.** Vorrichtung nach Anspruch 9,
**dadurch gekennzeichnet, dass** der erste Phasenwandler (3) als spiralförmige Phasenplatte ausgebildet ist, bei der eine Oberfläche in Arte einer Schraubenfläche ausgebildet ist.

**11.** Vorrichtung nach Anspruch 9 oder 10,
**dadurch gekennzeichnet, dass** zumindest der erste Phasenwandler (3) aus einem gyrotropen kubischen Kristall besteht, vorzugsweise eines Sillent-Typs.

**12.** Vorrichtung nach einem der Ansprüche 9 bis 11,
**dadurch gekennzeichnet, dass** zumindest zwischen dem Lichtphasenwandlersystem und dem elektrooptischen Element (1) eine Immersionsflüssigkeit zur Beseitigung von Brechungseffekten vorgesehen ist.

**13.** Vorrichtung nach Anspruch 12,
**dadurch gekennzeichnet, dass** die Immersionsflüssigkeit eine dielektrische Flüssigkeit ist und die Mantelfläche des elektrooptischen Elementes (1) zumindest benetzt.

**14.** Vorrichtung nach einem der Ansprüche 1 bis 8,
**dadurch gekennzeichnet, dass** das optische Lichtphasenwandlersystem aus einem biaxialen Kristall besteht.

**Claims**

**1.** A device for generating a bundle of Bessel light beams, having at least one electro-optical element (1) equipped with a light entry surface (1') and a light exit surface (1"), which lie opposite one another and bound the electro-optical element (1) along an optical axis passing through the optical element (1), **characterized in that**
said element provides a jacket surface, aligned longitudinally to the optical axis and laterally bounding the electro-optical element (1), said surfaces being applied along the surface electrodes and constructed in such a way that when an electrical voltage is applied to the surface electrodes (2) inside the electro-optical element (1), an electrical field can be generated whose field strength component oriented radially to the optical axis varies linearly in proportion to the radial distance to the optical axis,
and that outside the electro-optical element (1) an optical light phase converter system is provided along the optical axis, through which linearly polarised light can be passed, wherein the polarisation characteristics of the light beam can be adapted in accordance with an indicatrix prevailing within the electro-optical element (1) in such a way that at every point of the aperture, i.e. of the cross-section surface in the electro-optical element (1) illuminated by the light beam, the polarisation of the light beam coincides with axes that can be assigned to the indicatrix.

2.  The device according to Claim 1,
    **characterized in that**
    the electro-optical element (1) is an optically nonlinear crystal with trigonal crystal structure, preferably a lithium niobate crystal, ADP, KDP, BBO.

3.  The device according to Claim 1 or 2, **characterized in that**
    the electro-optical element (1) provides a cross-section surface which is oriented perpendicular to the optical axis of the electro-optical element (1),
    that the cross-section surface is bounded by a surface line contained in the jacket surface, which in each of at least four regions is hyperbolically curved,
    that the hyperbolically shaped regions have a concave curvature away from the respective optical axis, and that the hyperbolically formed surface line regions are equally distributed around the optical axis.

4.  The device according to Claim 3,
    **characterized in that**
    the surface electrodes (2) are constructed in the form of electrically conducting material layers, which are each provided exclusively in regions of the jacket surface that are hyperbolically curved.

5.  The device according to Claim 3 or 4, **characterized in that**
    the surface electrodes (2) are electrically insulated from one another in the circumferential direction along the jacket surface.

6.  The device according to one of Claims 1 to 5, **characterized in that**
    at least four surface electrodes (2) are arranged on the jacket surface of the electro-optical element (1) to generate a quadrupole electric field.

7.  The device according to Claim 6,
    **characterized in that**
    the surface electrodes (2) are constructed in the same size and shape and are distributed equally around the optical axis.

8.  The device according to one of Claims 1 to 7, **characterized in that**
    the electro-optical element (1) has a longitudinal extent with a cross-section that remains constant along the optical axis.

9.  The device according to one of Claims 1 to 8, **characterized in that**
    the light phase converter system has at least a first and second phase converter (3,4),
    that the second phase converter (4) is applied between the first phase converter (3) and the light entry surface (1') of the electro-optical element (1),
    that the first phase converter (3) converts linearly polarised light into elliptically polarised light with a predefinable orientation distribution within the aperture of the light beam, and
    that the second phase converter (4) is constructed as a $\lambda/4$ wave plate, which converts elliptically polarised light into linearly polarised light.

10. The device according to Claim 9,
    **characterized in that**
    the first phase converter (3) is constructed as a spiral-shaped phase plate, in which one surface is constructed in the form of a screw surface.

11. The device according to Claim 9 or 10, **characterized in that**
    at least the first phase converter (3) consists of a gyrotropic cubic crystal, preferably a Sillent type.

12. The device according to one of Claims 9 to 11, **characterized in that**
    an immersion fluid is provided at least between the light phase converter system and the electro-optical element (1), to eliminate refractive effects.

13. The device according to Claim 12,
**characterized in that**
the immersion liquid is a dielectric liquid and wets at least the jacket surface of the electro-optical element (1).

14. The device according to one of Claims 9 to 11, **characterized in that**
the optical light phase converter system consists of a biaxial crystal.

**Revendications**

1. Dispositif pour générer un faisceau de Bessel, avec au moins un élément électro-optique (1) disposant d'une surface d'entrée de lumière (1') et d'une surface de sortie de lumière (1") qui, en étant opposée l'une à l'autre, délimitent l'élément électro-optique (1) suivant un axe optique traversant l'élément optique (1), **caractérisé en ce que** dans l'étendue longitudinale par rapport à l'axe optique est prévue une surface latérale délimitant latéralement l'élément électro-optique (1), le long de laquelle des électrodes de surface sont agencées et réalisées de telle sorte qu'en cas d'application d'une tension électrique aux électrodes de surface (2), à l'intérieur de l'élément électro-optique (1), un champ électrique peut être généré dont la courbe de l'intensité de champ, orientée radialement par rapport à l'axe optique, varie proportionnellement de façon linéaire à la distance radiale par rapport à l'axe optique, et **en ce que** longitudinalement par rapport à l'axe optique, en dehors de l'élément électro-optique (1), un système optique de déphasage de lumière est prévu qui peut être traversé par une lumière à polarisation linéaire, dans lequel les propriétés de polarisation du rayon lumineux sont ajustables en fonction d'une indicatrice donnée à l'intérieur de l'élément électro-optique (1) de telle sorte que la polarisation du faisceau lumineux coïncide avec des axes pouvant être attribués à l'indicatrice, en chaque point de l'ouverture, c'est-à-dire de la superficie de section éclairée par le rayon lumineux dans l'élément électro-optique (1).

2. Dispositif selon la revendication 1, **caractérisé en ce que** l'élément électro-optique (1) est un cristal optiquement non linéaire à structure cristalline trigonale, de préférence un cristal de niobate de lithium, ADP, KD'P, BBO.

3. Dispositif selon la revendication 1 ou 2, **caractérisé en ce que** l'élément électro-optique (1) prévoit une superficie de section orientée verticalement à l'axe optique de l'élément électro-optique (1),
**en ce que** la superficie de section est délimitée par une ligne médiane contenue dans la surface latérale et qui est respectivement courbée en forme d'hyperbole dans au moins quatre zones,
**en ce que** les zones en forme d'hyperbole présentent une courbure respectivement détournée de façon concave à l'axe optique, et
**en ce que** les zones de surface latérale réalisées en forme d'hyperbole sont disposées de façon régulièrement répartie autour de l'axe optique.

4. Dispositif selon la revendication 3, **caractérisé en ce que** les électrodes de surface (2) sont réalisées comme des couches matérielles électriquement conductrices qui sont prévues respectivement exclusivement dans des zones de la surface latérales courbées en forme d'hyperbole.

5. Dispositif selon la revendication 3 ou 4, **caractérisé en ce que** les électrodes de surface (2) sont électriquement isolées les unes des autres dans la direction circonférentielle le long de la surface latérale.

6. Dispositif selon l'une quelconque des revendications 1 à 5, **caractérisé en ce qu'**au moins quatre électrodes de surface (2) sont disposées pour générer un champ électrique quadripolaire sur la surface latérale de l'élément électro-optique (1).

7. Dispositif selon la revendication 6, **caractérisé en ce que** les électrodes de surface (2) sont respectivement réalisées de forme et de dimension identiques et sont disposées autour de l'axe optique en étant réparties régulièrement dans la direction circonférentielle.

8. Dispositif selon l'une quelconque des revendications 1 à 7, **caractérisé en ce que** l'élément électro-optique (1) présente le long de l'axe optique une étendue longitudinale à section transversale constante.

9. Dispositif selon l'une quelconque des revendications 1 à 8, **caractérisé en ce que** le système de déphasage de lumière prévoit au moins un premier et un deuxième déphaseur (3, 4),

**en ce que** le deuxième déphaseur (4) est monté entre le premier déphaseur (3) et la surface d'entrée de lumière (1') de l'élément électro-optique (1),

**en ce que** le premier déphaseur (3) convertit de la lumière à polarisation linéaire en lumière à polarisation elliptique avec une répartition d'orientation des axes d'ellipse prédéfinissable à l'intérieur de l'ouverture du rayon lumineux, et

**en ce que** le deuxième déphaseur (4) est réalisé comme une lame λ/4 qui convertit la lumière à polarisation elliptique en lumière à polarisation linéaire.

10. Dispositif selon la revendication 9, **caractérisé en ce que** le premier déphaseur (3) est réalisé comme une lame de phase en spirale dans laquelle une surface est réalisée à la manière d'une surface hélicoïdale.

11. Dispositif selon la revendication 9 ou 10, **caractérisé en ce qu'**au moins le premier déphaseur (3) est composé d'un cristal cubique gyrotrope, de préférence de type Sillent.

12. Dispositif selon l'une quelconque des revendications 9 à 11, **caractérisé en ce qu'**au moins entre le système de déphasage de lumière et l'élément électro-optique (1) un liquide d'immersion pour éliminer des effets de réfraction est prévu.

13. Dispositif selon la revendication 12, **caractérisé en ce que** le liquide d'immersion est un liquide diélectrique et humecte au moins la surface latérale de l'élément électro-optique (1).

14. Dispositif selon l'une quelconque des revendications 1 à 8, **caractérisé en ce que** le système optique de déphasage de lumière se compose d'un cristal biaxe.

**Fig. 1**

a)

b)

**Fig. 2**

**Fig. 3**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3575486 A

**In der Beschreibung aufgeführte Nicht-Patentliteratur**

- **von J. Durnin.** Exact solutions for nondiffracting beams: I. The scalar theory. *J. Opt. Soc. Am. A,* 1987, vol. 4, 651-654
- **J. Durnin ; J. J. Miceli ; J. H. Eberly.** Diffraction-free beams. *Phys. Rev. Lett,* 1987, vol. 58, 1499-1501
- **V. N. Belyi ; N. S. Kazak ; N. A. Khilo.** Frequency conversion of Bessel light beams in nonlinear crystals. *Quantum Electronics,* 2000, vol. 30, 753-766
- **N. A. Khilo ; R. V. Chulkov ; V. N. Belyi ; N. S. Kazak ; A. S. Grabtchikov ; V. A. Orlovich.** Properties of Raman stokes light generated by a zero-order Bessel pump beam. B. I. Stepanov Institute of Physics of Belarus, 65
- **T. Dresel ; J. Schwider ; A. Wehrhahn ; S. Babin.** Grazing incidence interferometry applied to the measurement of cylindrical surfaces. *Optical Engineering,* 1995, vol. 34, 3531-3535
- **S. Klewitz ; F. Brinkmann ; S. Herminghaus ; P. Leiderer.** Bessel-beam pumped tunable distributed-feedback laser. *Appl. Opt.,* 1995, vol. 34, 7670-7673
- **V. E. Leparskii ; A.G. Mashchenko.** Elektrooptische kegelförmige Linsen für die Bildung von Bessel Lichtstrahlenbündel. *Izvestija der Staatsuniversität,* 2001, 9-12